(19) Europäisches Patentamt
European Patent Office
Office européen des brevets

(11) Numéro de publication : **0 502 022 B1**

# (12) FASCICULE DE BREVET EUROPEEN

(45) Date de publication du fascicule du brevet : **29.09.93 Bulletin 93/39**

(51) Int. Cl.$^5$ : **C08J 7/04,** C09D 167/02, C08G 63/695

(21) Numéro de dépôt : **90917117.5**

(22) Date de dépôt : **13.11.90**

(86) Numéro de dépôt international : **PCT/FR90/00809**

(87) Numéro de publication internationale : **WO 91/07456 30.05.91 Gazette 91/12**

## (54) FILMS POLYESTER COMPOSITES.

(30) Priorité : **21.11.89 FR 8915530**

(43) Date de publication de la demande : **09.09.92 Bulletin 92/37**

(45) Mention de la délivrance du brevet : **29.09.93 Bulletin 93/39**

(84) Etats contractants désignés : **AT BE CH DE DK ES FR GB GR IT LI LU NL SE**

(56) Documents cités :
**EP-A- 0 172 269**
**Base de données WPIL, AN=86071843(11), Derwent Publications Ltd, (London, GB)**

(73) Titulaire : **RHONE-POULENC FILMS**
**25, quai Paul Doumer**
**F-92408 Courbevoie (FR)**

(72) Inventeur : **FLEURY, Etienne**
**135 bis, rue de Montagny**
**F-69008 Lyon (FR)**
Inventeur : **TABUS, Laurent**
**6, impasse des Emeraudes**
**F-69780 Toussieu (FR)**
Inventeur : **VOVELLE, Louis**
**85, grande-rue de la Croix-Rousse**
**F-69004 Lyon (FR)**

(74) Mandataire : **Vignally, Noel et al**
**Rhône-Poulenc Chimie Direction de la Propriété Industrielle Centre de Recherches des Carrières B.P. 62**
**F-69192 Saint-Fons Cédex (FR)**

**EP 0 502 022 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet des films polyester composites à glissant amélioré destinés à servir de support à des revêtements finals d'application variés et notamment à des revêtement magnétiques.

En raison de leurs excellentes propriétés mécaniques et chimiques les films polyester consituent un matériau de choix comme support de revêtements filmogènes variés conduisant à des matériaux composites trouvant de nombreuses applications : emballages, pellicules photographiques, films ou feuilles pour arts graphiques, films métallisés, bandes magnétiques pour l'enregistrement de sons, d'images ou d'autres informations. Cependant, les films polyester manquent de glissant, ce qui occasionne des difficultés de mise en oeuvre et en particulier de bobinage, conséquence d'un coefficient de frottement élevé des films glissant sur eux-mêmes ou sur des surfaces métalliques lisses fixes ou en mouvement telles que celles présentes dans les appareils de fabrication des films (galets, cylindres), de transformation ou dans les appareils d'utilisation, en particulier ceux de reproduction de signaux enregistrés. Pour résoudre le problème posé par l'absence de glissant des films polyester, le moyen le plus utilisé consiste à leur communiquer une rugosité de surface par incorporation de particules inertes de sels ou d'oxydes métalliques qui génèrent des aspérités à la surface des films. Dans certains cas cette solution n'est pas toujours suffisante à elle seule pour communiquer aux films polyester le glissant souhaité et pour certains types d'applications elle s'avère néfaste pour les propriétés du revêtement final, en particulier lorsqu'il s'agit de revêtement magnétiques.

En effet, les irrégularités de surface du film support se traduisent par des irrégularités de surface du revêtement magnétique et même par une discontinuité de ce revêtement qui entraînent une perte d'information à l'enregistrement et/ou à la lecture de l'information. Par ailleurs, l'abrasion de ces aspérités lors des usages répétés des films magnétiques contribue également à leur détérioration.

Pour pallier ces différents inconvénients on a proposé de mettre en place sur les films polyester des revêtements destinés à améliorer leurs propriétés de glissant et par conséquent leur machinabilité et leur bobinabilité.

On a en particulier décrit des revêtements glissants, à base de polymères filmogènes convenant tout particulièrement bien pour les films polyesters à faible rugosité utilisés comme supports de couches magnétiques. Ainsi, dans le brevet américain n° 4 233 352 on a proposé de mettre en place sur au moins une des faces d'un film polyester support un revêtement vermiculé destiné à en améliorer les propriétés de glissant, constitué par un polymère soluble dans l'eau (alcool polyvinylique, méthylcellulose, hydroxyéthylcellulose, carboxyéthylcellulose, gommes naturelles) et par un polysiloxane de poids moléculaire compris entre 30 000 et 300 000, comportant éventuellement des groupes fonctionnels (époxy, amino ou hydroxy) et/ou par un caoutchouc styrènebutadiène. Dans les demandes de brevets européens n° 74 750, 88 635 et 108 593 on a décrit des revêtements glissants analogues aux précédents mais contenant en outre des agents de couplage destinés à améliorer la liaison entre la surface du film polyester et le revêtement. Ces agents de couplage sont constitués par des silanes à groupes fonctionnels : d'une part des groupes méthoxy, éthoxy, OH silanolique et d'autre part des groupes vinyles, époxy, amino, mercaptans. Ces revêtements présentent un intérêt industriel limité en raison de leur composition complexe due essentiellement à la mauvaise compatibilité des polymères solubles dans l'eau avec le film polyester très hydrophobe. Le problème se posait donc de trouver un revêtement conférant aux films polyester de bonnes propriétés de glissant et qui présentent une bonne compatibilité et par conséquent une bonne adhérence au polyester, sans recourir à des compositions complexes. La présente invention se propose de trouver une solution à ce problème.

Plus spécifiquement le présente invention a pour objet des films polyester composites à glissant amélioré constitués par un film polyester orienté dont l'une au moins des faces comporte un revêtement destiné à lui conférer un bon glissant caractérisé en ce que ledit revêtement est constitué par au moins un copolyester dissipable dans l'eau comportant une pluralité de motifs récurrents à groupes oxysulfonyles et de motifs récurrents de formule générale :

$$-Z-A-\underset{R_2}{\overset{R_1}{Si}}-O-(-\underset{R_4}{\overset{R_3}{Si}}-O)_n-\underset{R_2}{\overset{R_1}{Si}}-A-Z_1- \qquad (I)$$

dans laquelle :

- . $R_1$, $R_2$, $R_3$, $R_4$, identiques ou différents, représentent des radicaux alkyles, cycloalkyles, arylalkyles
- . A est un radical hydrocarboné divalent lié à l'atome de silicium vicinal par une liaison carbone-silicium, exempt d'insaturation aliphatique et pouvant comporter un hétéro-atome pris dans le groupe formé par O, Si, N.

. Z et $Z_1$ identiques ou différentes représentent les groupes fonctionnels divalents - O - et

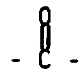

. n est un nombre entier ou fractionnaire compris entre 5 et 200.

Par groupe oxysulfonyle, on désigne au titre de la présente invention des groupes de formule générale :

$$-(SO_3)n1\ M \qquad (II)$$

dans laquelle :

. n1 est égal à 1 ou 2

. M représente un atome d'hydrogène, un métal alcalin ou alcalinoterreux, un cation ammonium ou ammonium quaternaire.

Par "copolyesters dissipables dans l'eau" on désigne au titre de la présente invention des copolyesters solubles dans l'eau ou formant avec l'eau des dispersions stables. Les copolyesters à groupes oxysulfonyles et à motifs siloxanes utilisables comme revêtements, conformément à la présente mention, seront dénommés par la suite, pour raison de commodité, "copolyesters sulfonés siliconés".

Les copolyesters sulfonés siliconés sont des produits nouveaux qui peuvent être obtenus selon les procédés usuels de préparation des polyesters linéaires à partir d'au moins un acide dicarboxylique ou de ses dérivés (esters d'alcools aliphatiques inférieurs, halogénures), d'au moins un diol d'au moins un acide dicarboxylique et/ou un diol comportant un ou plusieurs groupes oxysulfonyles et d'au moins un composé difonctionnel (diacide, diol, acide-alcool) à motifs siloxanes. Au titre de la présente invention, on désignera, par la suite, par alcool inférieur, alcanediol inférieur et par radical aliphatique ou alkoxy inférieur des alcools, diols et des radicaux comportant de 1 à 4 atomes de carbone.

Les acides dicarboxyliques auxquels on peut faire appel pour obtenir les copolyesters sulfonés siliconés peuvent être des diacides aliphatiques saturés comportant de 4 à 15 atomes de carbone tels que les acides adipique, succinique, sébacique, azélaïque, glutarique ou subérique ou des diacides aromatiques tels que les acides habituellement utilisés pour la préparation des polyesters linéaires ; à ce titre, on peut citer, comme exemples, les acides téréphtalique, isophtalique, phtalique, naphtalènedicarboxylique-2,5, naphtalénedicarboxylique-2,7, diphényldicarboxylique-4,4', la bis-hydroxycarbonyl-4,4' diphénylsulfone.

Parmi ces diacides, on fait appel de préférence aux diacides aromatiques seuls ou en mélange entre eux ou associés à une quantité mineure d'un ou plusieurs acides alcanedicarboxyliques, les acides dicarboxyliques aromatiques représentant de préférence au moins 80 % en moles du total des diacides exempts de groupes oxysulfonyles. Les acides téréphtalique et/ou isophtalique conviennent tout particulièrement bien.

Les diols qui peuvent être utilisés pour la préparation des copolyesters sulfonés siliconés sont ceux habituellement mis en oeuvre pour l'obtention des polyesters linéaires. On peut citer, à titre d'exemples, des alcane diols tels que l'éthylèneglycol, le propanediol-1,3 , le butanediol-1,4, le butanediol- 1,3, le dimétyl-2,2 propanediol -1,3, le pentanediol-1,5 , des polyoxylalkylènediols tels que les di-, tri-, tétra-, décaoxyéthylèneglycols, des cycloalcane-diols, des diols à groupes cycloalkylènes tels que le cyclohexanediméthanol-4,4'. Ces diols peuvent être utilisés seuls ou en mélange. On fait appel de préférence aux alcanediols inférieurs seuls ou en mélange entre eux et éventuellement associés à des diols plus condensés en carbone tels que le néopentylglycol, le cyclohexanediméthanol et les polyxoéthylèneglycols. La présence dans la chaîne des copolyesters sulfoné siliconé de motifs dérivés de polyoxyalkylèneglycols de formule $HO\ [(CH_2)x\ O]\ n_2H$ dans laquelle x est un nombre entier de 2 à 4 et $n_2$ un nombre entier de 2 à 10 et en particulier de ceux de formule $HO\ (CH_2CH_2 - O)\ n_2H$ se révèle avantageuse pour abaisser leur viscoélasticité. Lorsqu'on fait appel, comme diols exempts de groupes oxysulfonyles et/ou de motifs siloxanes, à un mélange d'alcanediols inférieurs et de diols plus condensés en carbone, les premiers représentent de préférence au moins 50 % en moles du total du mélange des dits diols. De préférence, les copolyesters selon l'invention comportent au moins 80 % en moles de motifs téréphtalate, isophtalate ou naphtalènedicarboxylate d'éthylèneglycol rapportés à 100 moles de motifs dérivés de diols.

Les groupes oxysulfonyles de formule (II) sont introduits dans le polyester par l'intermédiaire d'un composé difonctionnel à groupe oxysulfonyle, susceptible de réagir avec les diacides et/ou les diols au cours de la polycondensation.

Des exemples de tels monomères sont cités dans le brevet français n° 1 . 602.002. A cet effet, on peut utiliser des acides dicarboxyliques ou des diols comportant un ou plusieurs groupes oxysulfonyles, de préférence, sous forme de sels alcalins.

On fait appel, plus préférentiellement, à des acides dicarboxyliques à groupes oxysulfonyles et en particulier à des diacides de formule générale :

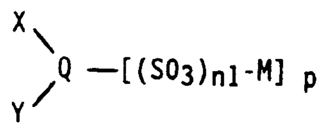 (III)

dans laquelle :

- M et $n_1$ ont la signification déjà donnée ;
- Q est un radical aromatique polyvalent ;
- X et Y sont des radicaux hydroxycarbonyles ou dérivés : esters d'alcools aliphatiques inférieur ou halogénures d'acides (chlorure, bromure) ;
- p est un nombre entier égal à 1 ou 2.

Dans la formule (III), Q représente plus spécifiquement un radical phényle ou une combinaison de 2 ou plus de 2 radicaux phényles ortho ou péricondensés ou de deux ou plusieurs groupes phényles liés entre eux par des groupes inertes tels que des radicaux alkylidènes (propylidène) ou des groupes éther, cétone, sulfone.

Comme exemples spécifiques d'acides dicarboxyliques à groupes oxysulfonyles, on peut citer les acides hydroxysulfonyltéréphtaliques ; hydroxysulfonylisophtaliques (en particulier, l'acide sulfo-5 isophalique) ; hydroxysulfonylorthophtaliques ; hydroxysulfonyl-4, naphtalènedicarboxylique-2,7 ; hydroxysulfonyldiphényl-dicarboxylique-4,4' ; les hydroxysulfonyl dihydroxycarbonyl-4,4' diphénylsulfones ; les hydroxysulfonyldihydroxycarbonyl-4,4' diphénylméthanes ; l'acide (hydroxysulfonylphénoxy)- 5 isophtalique, l'acide (hydroxysulfonylpropoxy) 5 isophtalique.

Pour l'obtention des copolyesters sulfonés siliconés les acides dicarboxyliques à groupes oxysulfonyles peuvent être utilisés sous leur forme acide ou, de préférence sous forme de leurs dérivés (halogénures ou esters d'alkyle inférieurs) capables de générer des polyesters. On fait appel de préférence aux diesters méthyliques. Le ou les groupes sulfoniques du diacide ou de ses dérivés est (sont) de préférence sous forme de sels alcalins.

Les motifs siloxanes sont introduits dans la chaîne des copolyesters sulfonés siliconés par un composé difonctionnel à motifs siloxanes capable de réagir avec les diols et/ou les acides dicarboxyliques, ou leurs dérivés, mis en oeuvre pour l'obtention des copolyesters. Plus spécifiquement on fait appel à des composés difonctionnels de formule générale :

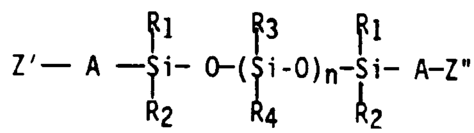 (IV)

Dans laquelle :

- $R_1$, $R_2$, $R_3$, $R_4$, A et n ont la signification donnée précédemment ;
- Z' et Z", identiques ou différents, représentent un groupe hydroxyle, un groupe hydroxycarbonyle, un groupe alkoxycarbonyle inférieur, un groupe halogénocarbonyle (chloro ou bromo).

Plus spécifiquement dans les formules I et IV, les différents symboles :

$R_1$, $R_2$, $R_3$, $R_4$ représentent des radicaux alkyles linéaires ou ramifiés comportant de 1 à 15 atomes de carbone tels que les radicaux méthyle ; éthyle ; n-propyle ; isopropyle ; n-butyle ; isobutyle ; n-pentyle ; éthyl-2 hexyle ; n-décyle ; des radicaux cycloalkyles comportant de 5 à 15 atomes de carbone tels que les radicaux cyclopentyle, cyclohexyle ; des radicaux arylalkyles dans lesquels la partie alkyle comporte de 1 à 15 atomes de carbone, tels que phényl-2 éthyle.

. A représente des radicaux alkylènes comportant de 1 à 15 atomes de carbone tels que les radicaux méthylène ; éthylène ; éthylidène ; propylène-1,3 ; butylène-1,4 ; a-méthylpropylène-1,3 ; pentylène-1,5 ; hexaméthylène, décaméthylène ; des radicaux constitués par un enchaînement d'un ou plusieurs radicaux arylènes (o, m ou p -phénylène éventuellement substitué par un ou plusieurs radicaux alkyles inférieurs) et d'un ou plusieurs radicaux alkylènes comportant de 1 à 15 atomes de carbone tels que ceux précités ; à ce titre, on peut citer, à titre d'exemple, des groupes de formules :

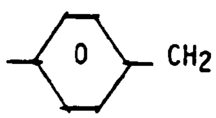 ; 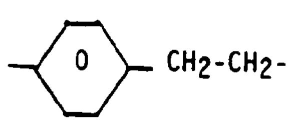 ;

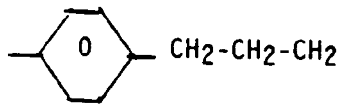 ; 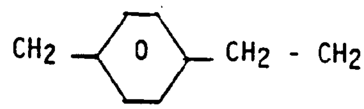 ;

des radicaux arylènes constitués par un ou plusieurs radicaux phényles ortho ou péricondensés tels que les radicaux phénylène, diphénylène, naphtylène, éventuellement substitués par un ou plusieurs radicaux alkyles inférieurs.

- des radicaux alkylènes, arylène-alkylène ou polyarylène comportant un ou plusieurs hétéroatomes pris dans le groupe de l'oxygène et du silicium, tels que les groupes polyoxalkylènes de formule générale :

$$[- O\ (CH_2)_{x1}-]_{n2}$$

dans laquelle x1 est un nombre entier de 1 à 4 et $n_2$ un nombre entier supérieur à 2 et de préférence de 2 à 10 ; les radicaux phénylèneoxyéthylène, phénylèneoxypropylène, les radicaux de formule :

$- O - Si - (CH_2)_y$ dans laquelle y est un nombre entier de 1 à 10 et de préférence de 1 à 4.

. n représente un nombre entier ou fractionnaire compris entre 8 et 100 et de préférence entre 10 et 80.

Comme exemples spécifiques de composés difonctionnels de formule (IV), on peut citer, à titre non limitatif, les composés de formule :

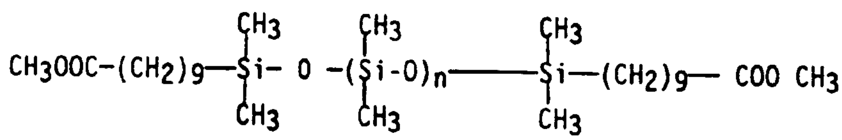

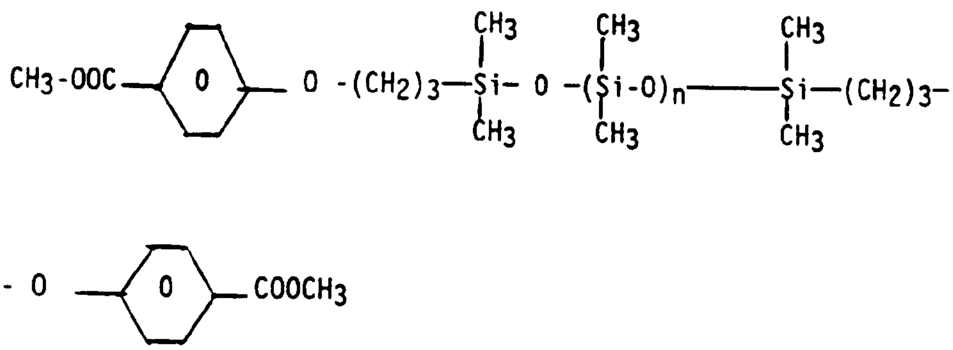

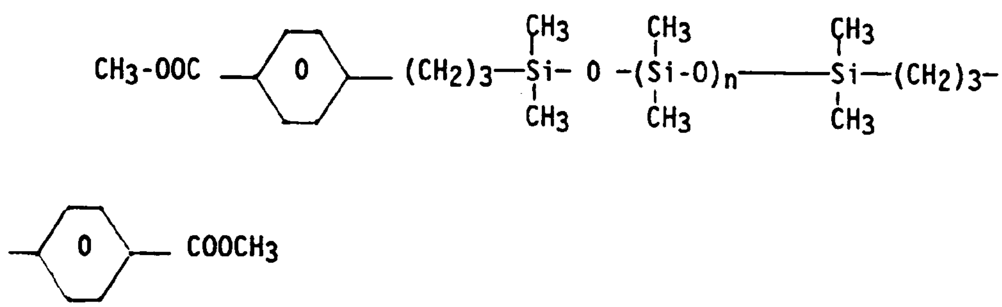

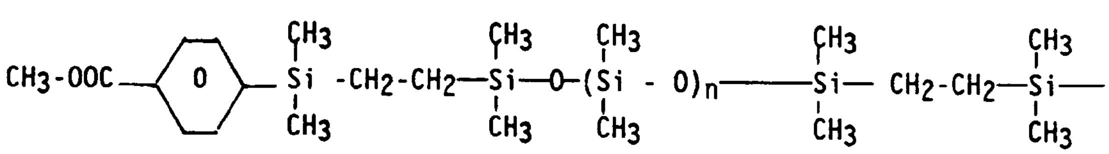

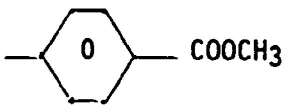

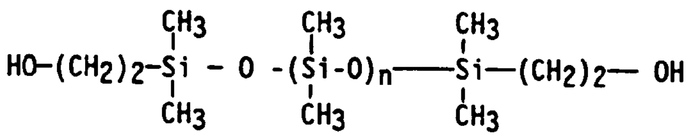

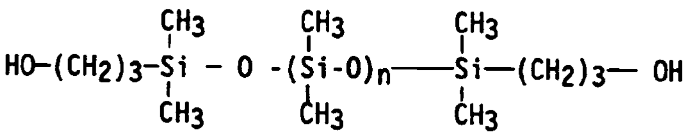

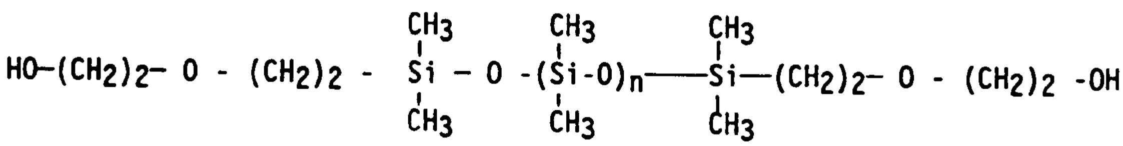

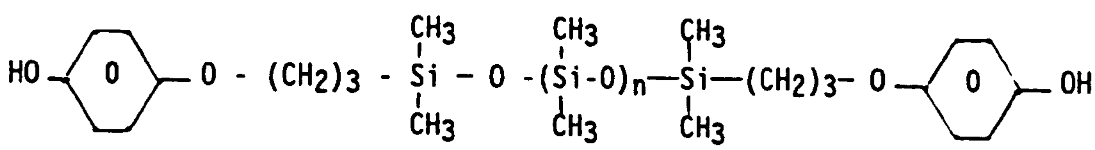

Les composés difonctionnels de formule (IV) sont des produits connus qui peuvent être préparés par les voies usuelles de synthèse des composés organosiliciques. On peut, par exemple, faire réagir un composé à motifs siloxanes et à groupes hydrogénosilyles terminaux avec un composé organique fonctionnel à insaturation éthylènique, en présence de platine ou encore mettre en contact un organo dialkylmonochlorosilane à groupe fonctionnel avec un polysiloxanediol ou ses dérivés éthers d'alkyle inférieur.

Les copolyesters sulfonés à motifs siloxanes peuvent être obtenus par les procédés usuels d'obtention des polyesters linéaires connus de l'homme de métier. De façon générale, dans une première étape, on fait réagir un ou plusieurs acides dicarboxyliques ou dérivés (esters d'alkyle inférieur, halogènures), au moins un diol, au moins un composé difonctionnel à groupe(s) oxysulfonyle(s) et au moins un composé de formule(IV) en présence des catalyseurs usuels d'estérification ou de transestérification puis, dans une deuxième étape, on procède à la polycondensation en présence des catalyseurs usuels.

Les conditions de température et de pression sont celles généralement mises en oeuvre pour chacune des deux étapes, ainsi la première étape peut être conduite à une température comprise entre 150 et 250°C environ et la seconde entre 210 et 280°C, les sous-produits de la réaction étant éliminés en continu par distillation sous pression réduite. De préférence la première et la seconde étape sont conduites à des températures comprises respectivement entre 180 et 200°C et entre 220 et 250°C. Selon une variante, il est possible de préparer un prépolymère exempt de motifs siloxanes et présentant, selon les cas, des groupes hydroxy, hydroxy-ou alkoxycarbonyles terminaux puis de le faire réagir avec un composé difonctionnel à motif siloxane pour obtenir un copolyester à blocs.

Les quantités respectives des divers monomères constitutifs du copolyester final mises en oeuvre dépendent des propriétés désirées pour ce dernier. D'une façon générale, la quantité de composé difonctionnel à groupe oxysulfonyle, exprimée en moles pour 100 moles de composé difonctionnel non sulfoné et non siliconé de même nature doit être suffisante pour conférer au copolyester final un caractère hydrophile tel qu'il puisse être au moins aisément dispersé dans l'eau en donnant des suspensions aqueuses stables.

En général, une quantité de monomère à groupe oxysulfonyle représentant plus de 2 % en mole des composés difonctionnels non sulfonés et non siliconés permet d'atteindre cet objectif. De préférence, la quantité de monomère à groupe oxysulfonyle est comprise entre 5 et 25 % en moles et, plus préférentiellement encore entre 7 et 20 %.

La quantité de composé difonctionnel à motifs siloxanes dépend de la teneur en silicium désirée pour le polymère final exprimée en pourcentage pondéral de silicium par rapport au copolyester sulfoné siliconé. La teneur en silicium est déterminée en fonction des propriétés recherchés pour le polymère final et en particulier de ses propriétés physicochimiques de surface. En général, on cherche à introduire de 0,05 à 5 % en poids de silicium dans le copolyester et, de préférence de 0,1 à 2,5 % en poids. La quantité de monomères difonctionnels à motifs siloxanes mise en oeuvre pour atteindre cet objectif doit également tenir compte du taux de transformation dudit monomère et/ou de réactions secondaires qui sont variables selon les conditions de réaction. Cette quantité peut être aisément déterminée dans chaque cas particulier au moyen d'essais simples. En général, il est avantageux de mettre en oeuvre un excès de composé difonctionnel à motifs siloxanes par rapport à la quantité stoéchiométrique théoriquement nécessaire pour atteindre le taux de silicium désiré.

La quantité totale de diols : alkylèneglycol et le cas échéant diol à groupes(s) oxysulfonyle(s) et/ou diol à motifs siloxanes, est au moins voisine de la quantité stoéchiométrique, c'est-à-dire voisine de 1 mole de diols par mole de diacide(s) ; on préfère cependant mettre en oeuvre un excès de diol(s) par rapport au(x) diacide(s). De préférence, la quantité d'alkylènediol(s) mise en oeuvre est comprise entre 1,5 et 3 moles par mole de diacide(s).

Parmi les copolyesters sulfonés siliconés ceux qui présentent dans leur chaîne une pluralité de motifs polyoxyalkylène, et plus particulièrement de motifs polyoxyéthylène de formule :
$-[O - CH_2 - CH_2]_{n2}-$ dans laquelle $_{n2}$ est un nombre entier compris entre 2 et 10, sont particulièrement avantageux. En effet, la présence de tels motifs permet de modifier les propriétés viscoélastiques du copolyester et par conséquent d'influer favorablement sur les propriétés d'adhérence de revêtements à base des copolyesters selon l'invention à des polyesters linéaires usuels.

Les copolyesters sulfonés siliconés, peuvent donc préférentiellement contenir une quantité efficace d'un polyoxyalkylènediol et notamment d'un polyoxyéthylèneglycol pour en modifier les propriétés viscoélastiques. En général, une quantité de polyoxyalkylènediol représentant de 1% en poids à 40% en poids de copolyester et, de préférence de 5% en poids à 25% en poids, convient bien. L'introduction de motifs polyoxyalkylènediol dans la chaîne des copolyesters sulfonés siliconés peut être obtenue par la mise en oeuvre d'une quantité adéquate d'un polyoxalkylènediol préformé ou bien par sa formation in situ à partir d'un alkylèneglycol grâce au choix des conditions de réaction et de polycondensation qui sont bien connues de l'homme de métier (par exemple : température, excés de glycol, acidité du milieu).

Les films orientés utilisés comme support du revêtement en copolyester sulfoné siliconé dans les films composites selon la présente invention sont constitués par des polyesters résultant de la polycondensation d'un ou plusieurs acides aromatiques dicarboxyliques (ou leurs dérivés) tels que les acides téréphtalique, isophtalique, naphtalènedicarboxylique-2,6 avec un ou plusieurs alkylène-glycols (éthylèneglycol ; propylèneglycol-1,3 ; butanediol-1,4). Des quantités mineures d'acides dicarboxyliques aliphatiques (acide adipique par exemple) ou d'acides cycloalcane dicarboxyliques ou de diols tels que les di ou trioxyalkylèneglycol, les diols aliphatiques ramifiés (néopentylglycol), le cyclohexanediméthanol-1,4, peuvent être associés aux diacides et diols de base. En général, ces composés ne représentent pas plus de 20 % en moles de ces derniers. On fait appel de préférence à des polyesters comportant au moins 80 % en moles de motifs dérivés d'au moins un acide dicarboxylique aromatique et d'éthylèneglycol et, plus préferentiellement, au moins 80 % en moles de motifs téréphtalate ou naphtalènedicarboxylates d'éthylèneglycol. Comme exemples de polyesters qui sont utilisés préférentiellement comme supports, on peut citer le polytéréphtalate d'éthylèneglycol ; le polytéréphtalate de butanediol-1,4 ; le polynaphtalènedicarboxylate-2,6 d'éthylèneglycol.

Les films polyester orientés supports sont obtenus de façon classique par extrusion d'une nappe de polyester amorphe, refroidissement de cette nappe, étirages dans une ou deux directions perpendiculaires, thermofixation et le cas échéant, traitements destinés à l'obtention de films équilibrés ou "surétirés".

Ils peuvent présenter sur l'une et/ou l'autre face une rugosité de surface générée au moyen de particules solides minérales présente dans le polycondensat et qui résultent soit de la précipitation, de façon connue en soi, de résidus catalytiques, soit de l'incorporation au polyester des charges minérales connues telles que les oxydes métalliques (alumine, silice, oxyde de titane), les alumino-silicates (Kaolin) les sels métalliques ($BaSO_4$ ; $CaCO_3$) ou leurs mélanges. La granulométrie de ces charges est celle généralement mise en oeuvre dans le domaine des films polyester et dépend de l'usage final auquel le film est destiné.

Les films polyester orientés support peuvent être eux mêmes simples ou composites. Ainsi on ne sortirait pas du cadre de la présente invention en utilisant comme film polyester support un film polyester composite obtenu par coextrusion de deux ou trois nappes de polymère différant par la nature du polyester les constituant et/ou par la présence ou non de charges, et/ou par la nature des charges, et/ou par la granulométrie des charges, et/ou par la teneur en charge. Par exemple, le film support peut être constitué par une couche d'un polyester non chargé et par une couche d'un polyester chargé.

L'épaisseur des films polyester support utilisés pour l'obtention des films polyester composites selon l'invention peut être comprise entre 5 et 300 μm.

Bien que le revêtement de copolyester sulfoné siliconé conforme à l'invention puisse être appliqué, ainsi qu'il a été exposé ci-avant, sur tout type de films polyester supports, il est utilisé avantageusement pour conférer de bonnes propriétés de glissant à des films polyester présentant une faible rugosité de surface. En particulier le revêtement de copolyester sulfoné siliconé convient tout particulièrement bien pour améliorer le glissant de films polyester présentant une épaisseur de 5 à 30 μm et une rugosité Ra ouCLA (écart moyen arithmétique), mesurée selon la norme DIN N° 4768 dans des conditions précisées ultérieurement, inférieure à 0,05 μm et de préférence inférieure à 0,01 μm. De tels films polyester sont recherchés pour la fabrication de matériaux (films, bandes, disques) magnétiques et en particulier de matériaux d'enregistrement magnétique à haute densité d'informations. Pour ce type d'application il convient de disposer d'un film présentant à la fois aussi peu d'aspérités de surface dures que possible, telles que celles apportées par des charges minérales ou pratiquement exempt de charges, et un pouvoir glissant aussi élevé que possible du film sur lui-même ou sur des surfaces métalliques fixes ou en mouvement. Le recours aux revêtements de copolyesters sulfonés siliconés conformes à la présente invention permet de concilier ces deux exigences contradictoires.

La présente invention a donc comme second objet l'utilisation des films composites conformes à l'invention et dont le film polyester orienté support présente une rugosité Ra inférieure ou égale à 0,05 μm pour la fabrication de matériaux d'enregistrement magnétique, notamment ceux à haute densité d'information dont le revêtement magnétique est formé par évaporation d'oxydes ou d'alliages métalliques ou par revêtement cathodique (sputtering).

Enfin la présente invention a pour troisième objet les matériaux d'enregistrement magnétique à bon pouvoir glissant, notamment ceux à haute densité d'information dont le revêtement magnétique est formé par évaporation d'oxydes ou d'alliages métalliques ou par revêtement cathodique (sputtering) dont le support est constitué par les films polyester composites à revêtement glissant décrits ci-avant.

Le dépôt d'un revêtement de copolyester sulfoné siliconé sur le film polyester support est réalisé à partir d'une composition aqueuse de revêtement ; cette composition peut être, selon la teneur du copolyester en motifs à groupes oxysulfonyles, une dispersion ou une solution. La teneur pondérale de la composition aqueuse en copolyester siliconé sulfoné n'est pas critique ; cependant, pour des raisons pratiques évidentes on évite de faire appel à des teneurs trop faibles ou trop élevées. En général la teneur pondérale de la composition aqueuse de revêtement en copolyester sulfoné siliconé est comprise entre 5% et 50% et, de préférence entre 7% et 30%.

Les compositions aqueuses de revêtement sont préparées de façon connues par addition du copolyester sulfoné siliconé à une quantité convenable d'eau distillée ou déionisée. Divers additifs peuvent être ajoutés à la composition aqueuse sans sortir du cadre de l'invention : agents stabilisants, agents antistatiques, agents tensio-actifs ioniques ou non ioniques par exemple. Suivant l'utilisation finale des films composites selon la présente invention des charges peuvent être introduits dans la composition aqueuse. La nature, la concentration pondérale dans le copolyester sulfoné siliconé et le diamètre moyen des charges sont choisis en fonction de l'utilisation finale du film composite. D'une manière générale il peut s'avérer opportun de conférer à une face d'un film support exempt de charge une rugosité plus importante que celle résultant du revêtement exempt de charge, par exemple pour favoriser l'échappement d'air entre la face revêtue et la face non revêtue ou entre la face revêtue et une autre surface ou pour abaisser encore les coefficients de frottement du film sur lui-même ou sur d'autres surfaces. Pour des applications des films composites selon la présente invention étrangères aux matériaux d'enregistrement magnétique on peut faire appel à des charges inorganiques (sels ou oxydes métalliques tels que Ca $CO_3$, Ba $SO_4$, Ti $O_2$, alumines, silices, aluminosilicates, zéolithes) ou à des charges polymères. Pour des films composites destinés à servir de support à des revêtements magnétiques on fait appel de préférence à des charges polymères : polypropylène, polystyrène réticulé ou non par du divinylbenzéne, polyamides, polyesters thermotropes par exemple. De préférence on a recours à des charges dont les particules sont sensiblement sphériques, c'est-à-dire des particules dont le rapport du diamètre le plus grand au diamètre le plus faible est compris entre 1 et 1,2. Plus préférentiellement encore on a recours à des charges dont la distribution des dimensions particulaire est faible c'est-à-dire à des charges monodisperses. D'une manière générale la quantité de charge exprimée en pourcentage pondéral par rapport au copolyester sulfoné siliconé peut être comprise entre 0,5% et 40% et de préférence entre 10% et 30%. Le diamètre moyen des particules est en général compris entre 0,05 μm et 0,5 μm, et de préférence entre 0,1 μm et 0,3 μm si le film composite doit être utilisé pour la fabrication de matériaux (bandes, disquettes) d'enregistrement magnétique.

Le dépôt du revêtement sur le film polyester peut être réalisé par les différentes techniques connues de l'homme de l'art. Ainsi, l'émulsion ou la solution aqueuse ou la dispersion de copolyester sulfoné siliconé peut être déposée par gravité à partir d'une couleuse à fente, ou par passage du film dans l'émulsion ou la solution

ou encore au moyen de rouleaux de transfert. L'épaisseur de la couche est contrôlée par tout moyen approprié. Le dépôt du revêtement peut avoir lieu soit avant tout étirage du film (enduction en ligne), soit après étirage avant ou après thermofixation (enduction en reprise). On préfère toutefois procéder à l'enduction du film polyester avant l'étirage ou entre deux étirages.

Préalablement à l'enduction, le film polyester peut être soumis à un traitement de surface choisi parmi ceux habituellement utilisés et, plus particulièrement, parmi les traitements physiques. Ainsi, la face destinée à recevoir le revêtement peut être soumise à des décharges électriques (traitement corona) ou à des radiations ionisantes. Cependant, de tels traitements ne sont pas indispensables.

La quantité de composition aqueuse d'enduction déposée sur le film dépend d'une part de sa teneur en extrait sec et, d'autre part, de l'épaisseur désirée pour le revêtement du film fini, c'est-à-dire après étirage et thermofixation lorsque l'enduction a lieu en ligne. Cette quantité dépend également du moment de l'enduction ; on doit évidemment tenir compte de la variation d'épaisseur du revêtement avant et après étirage, lorsque l'enduction est réalisée avant étirage. L'épaisseur du revêtement fini peut varier dans de larges limites.

En général l'épaisseur du revêtement est supérieure ou égale à 0,05 µm et inférieure à 1 µm. De préférence, elle est comprise dans un intervalle de 0,1 à 0,7 µm.

Après enduction, le film polyester est traité à chaud pour éliminer l'eau contenue dans le revêtement. Dans le cas de l'enduction en ligne, il n'est en général pas nécessaire de procéder à un traitement thermique ; le séchage est réalisé au cours de l'étirage et de la thermofixation. On ne sortirait cependant pas du cadre de la présente invention en procédant, dans ce cas, préalablement à l'étirage et à la thermofixation, à un traitement thermique suffisant pour provoquer le séchage.

Le revêtement de polymère sulfoné siliconé peut être appliqué sur une seule des faces ou sur les deux faces du film polyester support selon le type d'application auquel est destiné le film composite.

L'obtention des films d'enregistrement magnétique conformes à l'invention est réalisée par dépôt sur une des faces des films polyester composites, selon les procédés connus, d'une substance magnétique. Bien que l'on puisse faire appel à l'enduction par un enduit magnétique constitué par une substance ferromagnétique telle que les oxydes de fer, de nickel, de cobalt, de chrome ou leurs mélanges dispersés dans un liant polymère, les films polyester conformes à l'invention conviennent tout particulièrement bien à l'obtention de films à haute densité d'informations par dépôt d'un revêtement magnétique mince par les techniques d'évaporation de métal, ou de métallisation ionique. Préalablement au dépôt du revêtement magnétique, le film polyester composite peut être soumis à divers traitements pour améliorer ses propriétés. Ainsi, il peut subir un traitement corona pour augmenter ses propriétés d'adhésion au revêtement magnétique. Dans le même but, il est encore possible de lui appliquer une couche primaire d'adhérence. A cet effet, on peut faire appel aux nombreuses compositions décrites dans la littérature et bien connues de l'homme de l'art. Les exemples suivants illustrent l'invention et montrent comment elle peut être mise en pratique. Dans ces exemples, les propriétés des films supports et/ou des films composites auxquelles on se réfère sont les suivantes :

1°) <u>Rugosités</u>

a) <u>Ecart moyen arithmétique : rugosité Ra (ou CLA)</u>

Cette caractéristique définie dans la norme DIN 4.768 a été mesurée sur un appareil PERTHEN S6P conformément à la méthode décrite dans cette norme, dans les conditions suivantes :

- valeur de la longueur d'onde de coupure (cut-off) : 0,08 mm,
- longueur de palpage : 1,75 mm,
- rayon de courbure du palpeur : 5 µm
- force d'appui du palpeur : 50 mg.f

Le résultat retenu est la moyenne de 30 mesures effectuées sur des profils distants de 20 µm.

b) <u>Hauteur maximale des pics de surface : HM</u>

La hauteur maximale des pics de surface a été déterminée par interférométrie selon NOMARSKI, en lumière blanche. A cet effet on a utilisé un microscope NACHET NS 400 équipé d'un interféromètre NOMARSKI, et d'un objectif ayant un grossissement de 80.

c) <u>Rugosité tridimentionnelle optique SRa.</u>

La rugosité SRa représente l'écart moyen arithmétique de la rugosité de surface par rapport au plan moyen exprimée en µm (il s'agit de l'extension de la rugosité Ra à une surface).

La rugosité SRa a été déterminée au moyen d'un appareil de marque SURFCORDER ET-30 HK équipé de l'unité de traitement SPA 11 de la Société KOSAKA Laboratories Ltd et d'un capteur de type optique de marque HIPOSS, dans les conditions suivantes :

- longueur d'onde de coupure (Cut-Off) - 0,08 mm
- grandissement : x 20 000
- vitesse de palpage : 20 µm/s
- longueur de palpage : 0,25 mm avec un pas d'échantillonnage de 0,5 µm

- nombre de profils : 150 avec un pas entre profils de 0,5 µm.
- surface testée : 0,25 mm x 0,075 mm
- gain : 1
- hystérésis : 1

d) Morphologie de surface

Le film PET enduit est examiné à l'aide d'un microscope électronique à balayage de marque commerciale JEOL JSM 35C après avoir été dorés sur la face comportant le revêtement de copolyester sulfoné siliconé.

2°) Coefficients de friction

Coefficients de friction statique (µs) et dynamique (µd) film/métal

Ils ont été déterminés selon la méthode dite "SHOE-SHINE" décrite dans la demande de brevet japonais J 63 28627 en utilisant un appareil analogue à celui décrit dans ladite demande avec les conditions suivantes :

- diamètre du galet 6 mm
- largeur de bande 1,27 cm
- vitesse de défilement 0,9 m/mn
- tension 50 g
- durée 15 mn
- température 25°C
- humidité relative 35 %
- aire de contact 1,27 x 0,7 cm2

La fréquence de sollicitation en cisaillement est de l'ordre de 2 Hz.

Les coefficients de frottement film sur film sont déterminés après recouvrement du galet métallique avec le film polyester non enduit ou avec le film polyester enduit.

Dans les exemples suivants les abréviations DEG, TEG, QEG, désignent le diéthyléneglycol, le triéthyléneglycol, le tétraéthylèneglycol.

EXEMPLE N° 1

A. Préparation d'un copolyester sulfoné siliconé

1°) Préparation d'un composé difonctionnel à motifs polysiloxanes

On a préparé un composé difonctionnel (A), de poids moléculaire 1400, répondant à la formule :

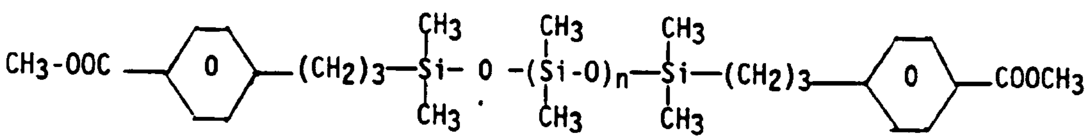

dans laquelle n est égal à 12,13, de la façon suivante :

Dans un ballon à 3 tubulures muni d'un agitateur, d'un condensateur et d'un thermomètre, on introduit 0,059 moles (67,88 g) d'une huile polydiméthylsiloxane à groupes hydrogénodiméthylsilyle terminaux comportant 12,13 motifs diméthylsilyloxy. Le contenu du ballon est porté à 80°C sous courant d'azote au moyen d'un bain d'huile, puis on introduit, sous agitation, 5 parties par million de platine par rapport à l'huile polysiloxanique puis, 0,118 moles (22,7 g) d'allylbenzoate de méthyle en 25 mn. La température de la masse réactionnelle est ensuite portée à 120° C en 15 mm ; on la maintient à cette température pendant 20 mn. Le dosage des fonctions Si H montre que la totalité de l'huile polysiloxane a réagi.

2°) Préparation du copolyester

Dans un réacteur en acier inoxydable de 7,5 litres muni d'un agitateur à ancre, d'une double enveloppe pour la circulation d'un liquide caloporteur et d'une colonne de distillation régulée par une électrovanne, on introduit à froid : - 1280 g (6,59 moles) de téréphtalate de diméthyle (DMT)

- 329 g (1,69 moles) d'isophtalate de diméthyle (DMI)
- 329 g (1,11 moles) de sulfo-5 isophtalate de diméthyle (SIPD)
- 80,23 g (0,05 moles) du composé difonctionnel (A)

- 1334 ml (23,86 moles) d'éthylène glycol
- 0,35 g d'aminotriéthanolate de titane comme catalyseur d'interéchange et de polycondensation.

L'agitation est mise en marche, puis le contenu du réacteur est porté rapidement à 182° C,température à laquelle le méthanol commence à distiller. La température dans le mélange réactionnel est alors amenée entre 220° C et 240° C en 45 minutes avec distillation de l'excès d'éthylèneglycol . La masse réactionnelle est alors transférée dans un autoclave chauffé à 250° C. La pression est réduite à 0,5 torr et la polycondensation est poursuivie pendant environ 50 minutes. Le polymère est ensuite coulé et refroidi. Il se présente sous la forme d'un solide écru qui est hydrodispersable dans l'eau.

On réalise ensuite les analyses suivantes :

1) Evaluation de la masse molaire par chromatographie par perméation de gel (GPC) dans la N - méthylpyrrolidone à 60°C. Les valeurs sont données en équivalents polystyrène.

2) Estimation de la teneur en motifs oxyéthylèniques par méthanolyse préalable du polymère et dosage par chromatographie en phase vapeur (CPV). Les résultats sont exprimés en pourcentage en poids par rapport au polymère.

3) Mesure du pourcentage en poids d'atome de silicium au moyen d'un appareil à fluorescence X.

4) Détermination des températures de transition vitreuse (Tg) après conditionnement des échantillons à 33, 52 ou 65 % en humidité relative.

5) Observation microscopique d'un film obtenu par dissolution puis évaporation. Le copolyester (A) ainsi obtenu présente les propriétés suivantes :

- Tg à 33% HR : 48°C
- Tg à 52% HR : 43°C
- Tg à 65% HR : 40°C
- Poids moléculaire (déterminé par chrocomatographie en phase gazeuse dans la N-méthylpyrrolidone à 50°C).
  . $M_n$ : 21 380
  . $M_w$ : 46 240
  . $M_z$ : 68 240
- Si % en poids : 0,35
- DEG % en poids : 14,8
- TEG % en poids : 5,5
- QEG % en poids : 1,1

Ce copolyester présente une Tg à environ - 100°C correspondant à la phase polysiloxane.

B Préparation d'un film polyester composite

Le copolyester (A) décrit précédemment est dispersé sous agitation dans une quantité adéquate d'eau distillée à 70°C pour obtenir une dispersion aqueuse stable à température ambiante contenant 10% en poids de copolyester. On dépose ensuite sur un film polyester biétiré de 30 μm d'épaisseur une couche de la dispersion aqueuse de 4 μm d'épaisseur au moyen d'un appareil de marque commerciale HAND COATER équipé d'une barre filetée N°0. Le film enduit est ensuite séché sous tension à 120°C pendant 30 secondes. L'épaisseur de l'enduit après séchage est inférieure à 0,5 μm.

Le film polyester support soumis à l'enduction a été obtenu par filmature de façon connue d'un polytéréphtalate d'éthylèneglycol d'indice de viscosité 650, exempt de charge. La rugosité Ra du film ainsi obtenu est, avant enduction, inférieure à 0,01 μm et la rugosité S Ra de 0,016 μm. Le film enduit présente les propriétés suivantes :

1) Coefficients de frottement :
   a) Face enduite/métal
      - μs : 0,2
      - μd : 0,12
   b) Face enduite/face non enduite
      - μs : 0,55
      - μd : 0,5

2) HM face enduite : 0,2 μm

La face enduite présente une excellente résistance à l'abrasion.

EXEMPLES 2 A 3

A. Préparation de copolyesters sulfonés siliconés

En opérant comme à l'exemple 2 on a préparé un copolyester (B) aprés avoir remplacé le composé difonctionnel (A) par un composé (B) de même formule générale, mais le poids moléculaire égal à 1600 (n = 14,83), puis un copolyester (B1) par mise en oeuvre de 0,0179 moles de (B) au lieu de 0,036.

Les copolyesters (B) et (B1) présentent les propriétés suivantes :

| | Copolyester | |
|---|---|---|
| | B | B1 |
| - Tg à : 33% HR | 57 | 55 |
| 52% HR | 53 | 53 |
| 65% HR | 52 | 51 |
| - Poids moléculaire : $M_n$ | 21 080 | 20 180 |
| $M_w$ | 41 140 | 41 000 |
| $M_z$ | 59 220 | 58 470 |
| - Si % en poids | 0,32 | 0,15 |
| - DEG % en poids | 10,4 | 11,2 |
| - TEG % en poids | 2,3 | 2,9 |
| - QEG % en poids | 0,3 | 0,4 |

Les copolyesters (B) et (B1) présentent également une Tg à - 100°C correspondant à la phase polysiloxane.

B Préparation de films composites

En opérant selon le procédé de l'exemple 1 on a préparé deux films composites (CB) et (CB1) par enduction du même film support à l'aide d'une dispersion aqueuse à 10% en poids de copolyesters (B) et (B1) dont les revêtements ont une épaisseur inférieur à 0,5 µm.

Les films composites obtenus présentent les propriétés suivantes :

| Ex | Films | HM | COEFFICIENT DE FROTTEMENT | | | |
|---|---|---|---|---|---|---|
| | | µm | FACE ENDUITE/METAL | | FACE ENDUITE/FACE NON ENDUITE | |
| | | | µs | µd | µs | µd |
| 2 | CB | 0,2 | 0,11 | 0,1 | 0,24 | 0,12 |
| 3 | CB1 | 0,2 | 0,12 | 0,11 | 0,25 | 0,18 |

Exemple 4

1) Préparation d'une composition d'enduction

On disperse sous agitation le copolyester (B) décrit à l'exemple 2 dans une quantité d'eau distillée dans des proportions calculées pour que la dispersion aqueuse ait une teneur de 20% en poids en copolyester (B).

2) Préparation d'un film composite ($C_1B$)

On prépare un film composite par enduction en ligne d'un film en polytéréphtalate d'éthylèneglycol exempt de charge à l'aide de la dispersion décrite précédemment déposée entre l'étirage longitudinal et l'étirage transversal du procédé de filmature.

Les conditions sont les suivantes :

- étirage longitudinal
  . taux : 3,4
  . température : 75 °C
- étirage transversal
  . température : 105 - 130°C
  . taux : 3,7
- thermofixation : 210°C

(Le film non enduit obtenu dans ces conditions présente une rugosité SRa égale à 0,016 µm).

L'enduction est réalisée par passage du film monoétiré entre un rouleau report et un rouleau presseur en caoutchouc, le rouleau report étant en contact avec un cylindre gravé tournant dans la dispersion aqueuse (systéme hélio-report). Le film enduit monoétiré passe ensuite dans une zone de préchauffage portée à 95°C dans laquelle s'effectue le séchage de l'enduit, puis il est étiré transversalement, soumis à la fixation et bobiné. Le film obtenu a une épaisseur de 9 µm ; l'épaisseur de l'enduit est de 0,7 µm.

Le film composite ($C_1B$) présente les propriétés suivantes :

. HM : 0,15 µm
. Coefficient de frottement face enduite sur métal
  - µs : 0,45
  - µd : 0,3
. tenue à l'abrasion : bonne

EXEMPLE N° 5

On a préparé un film composite ($C_2B$) en opèrant selon le procédé de l'exemple 4 aprés avoir ajouté à la composition d'enduction 6% en poids par rapport au copolyester (B) de billes de polystyrène ayant un diamètre moyen de 0,15 µm.

Le film ($C_2B$) présente les mêmes épaisseurs que le film ($C_1B$), les propriétés de surface sont les suivantes :

. HM : 0,15 µm
. Coefficient de frottement face enduite/métal :
  - µs : 0,25
  - µd : 0,2
. Résistance à l'abrasion : bonne

**Revendications**

1. Films polyester composites à glissant amélioré constitués par un film polyester orienté dont l'une au moins des faces comporte un revêtement destiné à lui conférer un bon glissant caractérisé en ce que ledit revêtement est constitué par au moins un copolyester dissipable dans l'eau comportant une pluralité de motifs récurrents à groupes oxysulfonyles et de motifs récurrents de formule générale :

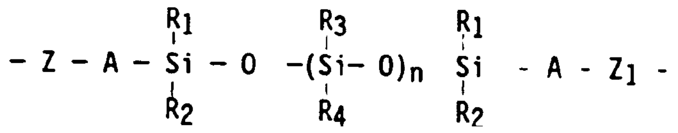 (I)

dans laquelle :

. $R_1$, $R_2$, $R_3$, $R_4$, identiques ou différents, représentent des radicaux alkyles, cycloalkyles, arylalkyles

. A est un radical hydrocarboné divalent lié à l'atome de silicium vicinal par une liaison carbone-silicium, exempt d'insaturation aliphatique et pouvant comporter un hétéro-atome pris dans le groupe formé par O, Si, N.

. Z et $Z_1$ identiques ou différentes représentent les groupes fonctionnels divalents - O - et

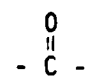

. n est un nombre entier ou fractionnaire compris entre 5 et 200.

2. Films polyester composites selon la revendication 1 caractérisés en ce que le copolyester sulfoné siliconé constituant le revêtement comporte une pluralité de groupes oxysulfonyles de formule générale :

$$-(SO_3)_{n1}-M$$

dans laquelle :

. $n_1$ est égal à 1 ou 2

. M représente un atome d'hydrogène, un métal alcalin ou alcalino-terreux, un cation ammonium, un cation ammonium quaternaire.

3. Films polyester composites selon l'une quelconque des revendications 1 à 2 caractérisés en ce que le polyester sulfoné siliconé constituant le revêtement comporte au moins 80% en moles de motifs dérivés d'acides dicarboxyliques aromatiques par rapport à l'ensemble des acides dicarboxyliques exempt de groupes oxysulfonyles et de motifs siloxanes.

4. Films polyester composites selon la revendication 3 caractérisés en ce que les motifs dérivés d'acides dicarboxyliques aromatiques sont pris dans le groupe des motifs téréphtalate, isophtalate, naphtalènedicarboxylates.

5. Films polyester composites selon l'une quelconque des revendications 1 à 3 caractérisés en ce que le polyester sulfoné siliconé constituant le revêtement comporte au moins 50% de motifs dérivés d'alcanediols inférieurs par rapport au total des diols exempts de groupes oxysulfonyles et/ou siloxanes.

6. Films polyester composites selon la revendication 5 caractérisés en ce que les motifs dérivés d'alcanediols sont des motifs éthylèneoxy.

7. Films polyester composites selon l'une quelconque des revendications 1 à 6 caractérisés en ce que le polyester sulfoné siliconé constituant le revêtement comporte de 5 à 25% en moles de motifs récurrents à groupes oxysulfonyles rapporté au total des motifs de même nature non sulfonés non siliconés.

8. Films polyester composites selon l'une quelconque des revendications 1 à 7 caractérisés en ce que le polyester sulfoné siliconé constituant le revêtement comporte une pluralité de motifs récurrents à groupes oxysulfonyles dérivés de composés difonctionnels de formule générale :

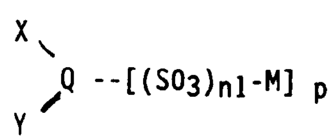 (III)

dans laquelle :

- M et $n_1$ ont la signification déjà donnée ;

- Q est un radical aromatique polyvalent ;
- X et Y sont des radicaux hydroxycarbonyle ou dérivés : esters d'alcools aliphatiques inférieurs ou halogénures d'acides.

**9.** Films polyester composites selon la revendication 8 caractérisés en ce que les motifs récurrents à groupes oxysulfonyles sont dérivés des acides hydroxysulfonylisophtaliques ou de leurs esters et halogènures.

**10.** Films polyester composites selon la revendication 9 caractérisés en ce que les motifs récurrents à groupes oxysulfonyles sont des motifs sulfo-5 isophtalates.

**11.** Films polyester composites selon l'une quelconque des revendications 1 à 10 caractérisés en ce que le polyester sulfoné siliconé constituant le revêtement comporte un nombre de motifs de formule (I) tel que sa teneur pondérale en silicium est comprise entre 0,05 et 5%.

**12.** Films polyester composites selon l'une quelconque des revendications 1 à 11 caractérisés en ce que le polyester sulfoné siliconé constituant le revêtement comporte de 1% à 40% en poids de motifs polyoxyalkylène de formule générale :

$$-[O\,(CH_2)_x\,]_{n2}$$

dans laquelle :

. x représente un nombre entier de 2 à 4

. $n_2$ représente un nombre entier de 2 à 10.

**13.** Films polyester composites selon l'une quelconque des revendications 1 à 12 caractérisés en ce que le film polyester orienté support est constitué par un polymère comportant 80% au moins en moles de motifs dérivés d'au moins un acide aromatique dicarboxylique et d'au moins un alcanediol inférieur.

**14.** Films polyester composite selon la revendication 13 caractérisés en ce que le film polyester orienté support est constitué par un polymère comportant au moins 80% en moles de motifs téréphtalate ou naphtalènedicarboxylate d'éthylèneglycol.

**15.** Films polyester composites selon l'une quelconque des revendications 1 à 14 caractérisés en ce que le film polyester orienté support a une épaisseur comprise entre 5 et 300 µm.

**16.** Films polyester composites selon l'une quelconque des revendications 1 à 15 caractérisés en ce que le film polyester orienté support a une rugosité Ra inférieure à 0,05 µm.

**17.** Procédé d'obtention de films polyester composites selon l'une quelconque des revendications 1 à 16 caractérisé en ce que l'on procède à l'enduction d'au moins une face d'un film polyester orienté support au moyen d'une composition aqueuse de copolyester sulfoné siliconé.

**18.** Procédé d'obtention de films composites selon la revendication 17 caractérisé en ce que le copolyester sulfoné siliconé est mis en oeuvre sous forme d'une dispersion aqueuse.

**19.** Procédé d'obtention de films composites selon la revendication 17 caractérisé en ce que le copolyester sulfoné siliconé est mis en oeuvre sous forme d'une solution aqueuse.

**20.** Procédé d'obtention de films composites selon la revendication 17 caractérisé en ce que l'enduction du film polyester orienté support est réalisée avant tout étirage ou entre deux étirages du film support.

**21.** Emploi des films polyester composites selon l'une quelconque des revendications 1 à 16 comme support de revêtements d'enregistrement magnétique.

**22.** Matériau d'enregistrement magnétique constitué par un film support comportant sur une de ses faces un revêtement glissant et sur l'autre un revêtement magnétique, caractérisé en ce que le film support est un film polyester composite selon l'une quelconque des revendications 1 à 17.

## Claims

**1.** Composite polyester films with improved slip, consisting of an oriented polyester film at least one of whose

faces comprises a coating intended to impart a good slip thereto, characterised in that the said coating consists of at least one water-dispersible copolyester comprising a plurality of repeat units containing oxysulphonyl groups and of repeat units of general formula:

$$-Z-A-\underset{R_2}{\overset{R_1}{Si}}-O-(\underset{R_4}{\overset{R_3}{Si}}-O)_n\ \underset{R_2}{\overset{R_1}{Si}}-A-Z_1- \qquad (I)$$

in which:

- $R_1$, $R_2$, $R_3$ and $R_4$, which are identical or different, denote alkyl, cycloalkyl and arylalkyl radicals,
- A is a divalent hydrocarbon radical bonded by a carbon-silicon bond to the vicinal silicon atom, free from aliphatic unsaturation and capable of containing a heteroatom taken from the group consisting of O, Si and N,
- Z and $Z_1$, which are identical or different, denote the divalent functional groups -O- and

$$-\overset{O}{\overset{\|}{C}}-,$$

- n is an integral or fractional number between 5 and 200.

**2.** Composite films according to Claim 1, characterised in that the silicone sulphonated copolyester constituting the coating comprises a plurality of oxysulphonyl groups of general formula:

$$-(SO_3)_{n1}-M$$

in which:

- n1 is equal to 1 or 2
- M denotes a hydrogen atom, an alkali or alkaline-earth metal, or an ammonium or quaternary ammonium cation.

**3.** Composite polyester films according to either of Claims 1 and 2, characterised in that the silicone sulphonated polyester constituting the coating comprises at least 80 mol% of units derived from aromatic dicarboxylic acids relative to the total of the dicarboxylic acids free from oxysulphonyl groups and of siloxane units.

**4.** Composite polyester films according to Claim 3, characterised in that the units derived from aromatic dicarboxylic acids are taken from the group of terephthalate, isophthalate and naphthalenedicarboxylate units.

**5.** Composite polyester films according to any one of Claims 1 to 3, characterised in that the silicone sulphonated polyester constituting the coating comprises at least 50 % of units derived from lower alkanediols relative to the total of the diols free from oxysulphonyl and/or siloxane groups.

**6.** Composite polyester films according to Claim 5, characterised in that the units derived from alkanediols are ethyleneoxy units.

**7.** Composite polyester films according to any one of Claims 1 to 6, characterised in that the silicone sulphonated polyester constituting the coating comprises from 5 to 25 mol% of repeat units containing oxysulphonyl groups relative to the total of the units of the unsulphonated nonsilicone units of the same nature.

**8.** Composite polyester films according to any one of Claims 1 to 7, characterised in that the silicone sulphonated polyester constituting the coating comprises a plurality of repeat units containing oxysulphonyl groups derived from difunctional compounds of general formula:

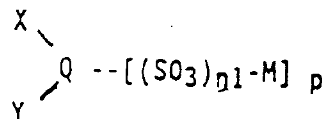

(III)

in which:

- M and $n_1$ have the meaning which has already been given;
- Q is a polyvalent aromatic radical;
- X and Y are hydroxycarbonyl radicals or derivatives: esters of lower aliphatic alcohols or acid halides.

9. Composite polyester films according to Claim 8, characterised in that the repeat units containing oxysulphonyl groups are derived from hydroxysulphonylisophthalic acids or from their esters and halides.

10. Composite polyester films according to Claim 9, characterised in that the repeat units containing oxysulphonyl groups are 5-sulphoisophthalate units.

11. Composite polyester films according to any one of Claims 1 to 10, characterised in that the silicone sulphonated polyester constituting the coating contains a number of units of formula (I) such that its silicon weight content is between 0.05 and 5 %.

12. Composite polyester films according to any one of Claims 1 to 11, characterised in that the silicone sulphonated polyester constituting the coating comprises from 1 % to 40 % by weight of polyoxyalkylene units of general formula:

$$-[O(CH_2)_x]_{n2}$$

in which:

- x denotes an integer from 2 to 4
- $n_2$ denotes an integer from 2 to 10.

13. Composite polyester film according to any one of Claims 1 to 12, characterised in that the base oriented polyester film consists of a polymer comprising at least 80 mol% of units derived from at least one aromatic dicarboxylic acid and at least one lower alkanediol.

14. Composite polyester films according to Claim 13, characterised in that the base oriented polyester film consists of a polymer comprising at least 80 mol% of ethylene terephthalate or naphthalenedicarboxylate units.

15. Composite polyester films according to any one of Claims 1 to 14, characterised in that the base oriented polyester film has a thickness of between 5 and 300 μm.

16. Composite polyester films according to any one of Claims 1 to 15, characterised in that the base oriented polyester film has an Ra roughness lower than 0.05 μm.

17. Process for obtaining composite polyester films according to any one of Claims 1 to 16, characterised in that at least one face of a base oriented polyester film is coated by means of an aqueous silicone sulphonated copolyester composition.

18. Process for obtaining composite films according to Claim 17, characterised in that the silicone sulphonated copolyester is used in the form of an aqueous dispersion.

19. Process for obtaining composite films according to Claim 17, characterised in that the silicone sulphonated copolyester is used in the form of an aqueous solution.

20. Process for obtaining composite films according to Claim 17, characterised in that the coating of the base oriented polyester film is performed before any drawing or between two drawing operations on the base film.

21. Use of the composite polyester films according to any one of Claims 1 to 16 as base for magnetic recording coatings.

22. Magnetic recording material consisting of a base film comprising a slip coating on one of its faces and a

magnetic coating on the other, characterised in that the base film is a composite polyester film according to any one of Claims 1 to 17.

## Patentansprüche

1. Polyesterverbundfilme mit verbesserter Gleitfähigkeit, die aus einem orientierten Polyesterfilm aufgebaut sind, wobei mindestens eine der Seiten desselben einen Überzug umfaßt, der dazu bestimmt ist, diesem eine gute Gleitfähigkeit zu verleihen, dadurch gekennzeichnet, daß besagter Überzug aus mindestens einem in Wasser verteilbaren Copolyester aufgebaut ist, welcher eine Mehrzahl von sich wiederholenden Oxysulfonylgruppen-Einheiten und von sich wiederholenden Einheiten der allgemeinen Formel:

$$-Z-A-\underset{R_2}{\overset{R_1}{\mathrm{Si}}}-O-(\underset{R_4}{\overset{R_3}{\mathrm{Si}}}-O)_n\underset{R_2}{\overset{R_1}{\mathrm{Si}}}-A-Z_1- \qquad (I)$$

in der:
- $R_1$, $R_2$, $R_3$, $R_4$, identisch oder verschieden, Alkyl-, Cycloalkyl-, Arylalkylreste darstellen,
- A ein zweiwertiger, mit einem vicinalen Siliciumatom über eine Kohlenstoff-Silicium-Bindung verbundener Kohlenwasserstoffrest ist, welcher frei von aliphatischer Unsättigung ist und ein Heteroatom, ausgewählt aus der Gruppe, die von O, Si, N gebildet wird, umfassen kann,
- Z und $Z_1$, identisch oder verschieden, die funktionellen zweiwertigen Gruppen - O - und

$$-\overset{\overset{\displaystyle O}{\|}}{C}-$$

darstellen,
- n für eine ganze oder gebrochene Zahl, die zwischen 5 und 200 eingeschlossen ist, steht,

umfaßt.

2. Polyesterverbundfilme nach Anspruch 1, dadurch gekennzeichnet, daß der sulfonierte silikonierte Copolyester, der den Überzug aufbaut, eine Mehrzahl von Oxysulfonylgruppen der allgemeinen Formel:

$$-(SO_3)_{n1}-M$$

in der:
- $n_1$ = 1 oder 2 ist,
- M ein Wasserstoffatom, ein Alkali- oder Erdalkalimetall, ein Ammoniumkation, ein quaternäres Ammoniumkation darstellt,

umfaßt.

3. Polyesterverbundfilme nach irgendeinem der Ansprüche 1 bis 2, dadurch gekennzeichnet, daß der sulfonierte silikonierte Polyester, der den Überzug aufbaut, in bezug auf die Gesamtheit der Dicarbonsäuren, die frei von Oxysulfonylgruppen und Siloxaneinheiten sind, mindestens 80 Mol-% Einheiten, die von aromatischen Dicarbonsäuren abgeleitet sind, umfaßt.

4. Polyesterverbundfilme nach Anspruch 3, dadurch gekennzeichnet, daß die von aromatischen Dicarbonsäuren abgeleiteten Einheiten aus der Gruppe der Terephthalat-, Isophthalat-, Naphthalindicarboxylat-Einheiten ausgewählt sind.

5. Polyesterverbundfilme nach irgendeinem der Ansprüche 1 bis 3, dadurch gekennzeichnet, daß der sulfonierte silikonierte Polyester, der den Überzug aufbaut, in bezug auf die Gesamtheit der Diole, die frei von Oxysulfonyl- und/oder Siloxangruppen sind, mindestens 50% Einheiten, die von niederen Alkandiolen abgeleitet sind, umfaßt.

6. Polyesterverbundfilme nach Anspruch 5, dadurch gekennzeichnet, daß die Einheiten, die von Alkandiolen abgeleitet sind, Ethylenoxyeinheiten sind.

**7.** Polyesterverbundfilme nach irgendeinem der Ansprüche 1 bis 6, dadurch gekennzeichnet, daß der sulfonierte silikonierte Polyester, der den Überzug aufbaut, in bezug auf die Gesamtheit der nicht-sulfonierten, nicht-silikonierten Einheiten gleicher Natur 5 bis 25 Mol-% sich wiederholende Oxysulfonylgruppen-Einheiten umfaßt.

**8.** Polyesterverbundfilme nach irgendeinem der Ansprüche 1 bis 7, dadurch gekennzeichnet, daß der sulfonierte silikonierte Polyester, der den Überzug aufbaut, eine Mehrzahl von sich wiederholenden Oxysulfonylgruppen-Einheiten umfaßt, die abgeleitet sind von difunktionellen Verbindungen der allgemeinen Formel:

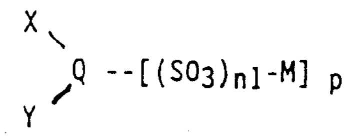 (III)

in der:
- M und $n_1$ die bereits gegebene Bedeutung aufweisen;
- Q ein mehrwertiger aromatischer Rest ist;
- X und Y Hydroxycarbonylreste oder Derivate: Ester von niederen aliphatischen Alkoholen oder Säurehalogenide sind.

**9.** Polyesterverbundfilme nach Anspruch 8, dadurch gekennzeichnet, daß die sich wiederholenden Oxysulfonylgruppen-Einheiten von Hydroxysulfonylisophthalsäuren oder deren Estern und Halogeniden abgeleitet sind.

**10.** Polyesterverbundfilme nach Anspruch 9, dadurch gekennzeichnet, daß die sich wiederholenden Oxysulfonylgruppen-Einheiten 5-Sulfo-isophthalat-Einheiten sind.

**11.** Polyesterverbundfilme nach irgendeinem der Ansprüche 1 bis 10, dadurch gekennzeichnet, daß der sulfonierte silikonierte Polyester, der den Überzug aufbaut, eine solche Zahl an Einheiten der Formel (I) umfaßt, daß sein Gewichtsgehalt an Silicium zwischen 0,05 und 5% eingeschlossen ist.

**12.** Polyesterverbundfilme nach irgendeinem der Ansprüche 1 bis 11, dadurch gekennzeichnet, daß der sulfonierte silikonierte Polyester, der den Überzug aufbaut, 1 bis 40 Gew.-% an Polyoxyalkylen-Einheiten der allgemeinen Formel:

$$-[O(CH_2)_x]_{n2}$$

in der:
- x eine ganze Zahl von 2 bis 4 darstellt,
- $n_2$ eine ganze Zahl von 2 bis 10 darstellt,

umfaßt.

**13.** Polyesterverbundfilme nach irgendeinem der Ansprüche 1 bis 12, dadurch gekennzeichnet, daß der orientierte Polyesterfilmträger aus einem Polymer aufgebaut ist, das mindestens 80 Mol-% Einheiten, die von mindestens einer aromatischen Dicarbonsäure und mindestens einem niederen Alkandiol abgeleitet sind, umfaßt.

**14.** Polyesterverbundfilme nach Anspruch 13, dadurch gekennzeichnet, daß der orientierte Polyesterfilmträger aus einem Polymer aufgebaut ist, das mindestens 80 Mol-% Ethylenglykolterephthalat- oder -naphthalindicarboxylat-Einheiten umfaßt.

**15.** Polyesterverbundfilme nach irgendeinem der Ansprüche 1 bis 14, dadurch gekennzeichnet, daß der orientierte Polyesterfilmträger eine Dicke, die zwischen 5 und 300 µm eingeschlossen ist, aufweist.

**16.** Polyesterverbundfilme nach irgendeinem der Ansprüche 1 bis 15, dadurch gekennzeichnet, daß der orientierte Polyesterfilmträger eine Rauhheit Ra unterhalb von 0,05 µm aufweist.

**17.** Verfahren zur Herstellung von Polyesterverbundfilmen nach irgendeinem der Ansprüche 1 bis 16, dadurch gekennzeichnet, daß man mindestens eine Seite eines orientierten Polyesterfilmträgers mittels einer

wäßrigen Zusammensetzung von sulfoniertem silikoniertem Copolyester beschichtet.

**18.** Verfahren zur Herstellung von Verbundfilmen nach Anspruch 17, dadurch gekennzeichnet, daß der sulfonierte silikonierte Polyester in Form einer wäßrigen Dispersion verwendet wird.

**19.** Verfahren zur Herstellung von Verbundfilmen nach Anspruch 17, dadurch gekennzeichnet, daß der sulfonierte silikonierte Polyester in Form einer wäßrigen Lösung verwendet wird.

**20.** Verfahren zur Herstellung von Verbundfilmen nach Anspruch 17, dadurch gekennzeichnet, daß die Beschichtung des orientierten Polyesterfilmträgers vor jeglichem Strecken oder zwischen zwei Streckvorgängen des Filmträgers durchgeführt wird.

**21.** Verwendung von Polyesterverbundfilmen nach irgendeinem der Ansprüche 1 bis 16 als Träger von magnetischen Aufzeichnungsschichten.

**22.** Magnetisches Aufzeichnungsmaterial, das aus einem Filmträger aufgebaut ist, der auf einer seiner Seiten einen gleitfähigen Überzug und auf der anderen einen magnetischen Überzug umfaßt, dadurch gekennzeichnet, daß der Filmträger ein Polyesterverbundfilm nach irgendeinem der Ansprüche 1 bis 17 ist.